# EUROPÄISCHE PATENTSCHRIFT

(11) **EP 2 504 743 B1**
(45) Veröffentlichungstag und Bekanntmachung des Hinweises auf die Patenterteilung: **02.04.2014**
(21) Anmeldenummer: 10734906.0
(22) Anmeldetag: 30.06.2010
(51) Int. Cl.: G05D 23/02, F16K 31/00

(54) **RÜCKLAUFTEMPERATURREGELVENTIL FÜR KÜHLANLAGEN**
RETURN FLOW TEMPERATURE CONTROL VALVE FOR COOLING SYSTEMS
RÉGULATEUR DE TEMPÉRATURE DE RETOUR POUR ÉQUIPEMENTS FRIGORIFIQUES

(30) Priorität: 26.11.2009 DE 102009055936
(43) Veröffentlichungstag der Anmeldung: 03.10.2012
(73) Patentinhaber: THEODOR HEIMEIER METALLWERK GMBH, 59592 Erwitte (DE)
(72) Erfinder: HENKE, Bernhard, 59929 Brilon (DE); ESSFELD, Fritz, 59581 Warstein (DE)
(86) Internationale Anmeldenummer: PCT/EP2010/003962
(87) Internationale Veröffentlichungsnummer: WO 2011/063862

(56) Entgegenhaltungen:
- WO-A1-00/06931
- WO-A2-2008/076864
- DE-A1- 10 064 620

## Beschreibung

Die Erfindung betrifft ein Rücklauftemperaturregelventil für Kühlanlagen mit einem Gehäuse, mit einem Zulaufstutzen, mit einem Ablaufstutzen, mit einem im Gehäuse angeordneten ersten Ventilsitz, der mit einem in Schließrichtung federbelasteten ersten Ventilkörper zusammenwirkt und mit einem Dehnstoffelement, das mit steigender Temperatur eines Kühlmittels den Ventilkörper vom Ventilsitz abhebt.

Ein derartiges Rücklauftemperaturregelventil ist aus der internationalen Patentanmeldung PCT WO 2008/076864 A2 bekannt. Dieses Rücklauftemperaturregelventil wird dem den einzelnen zu kühlenden Räumen zugeordneten Kühlaggregat nachgeschaltet. Es dient zur Sicherstellung eines voreingestellten Temperaturgefälles zwischen der Kühlmittelvorlauftemperatur und der Kühlmittelrücklauftemperatur des jeweiligen Kühlaggregates, um den Wirkungsgrad der Kühlanlage möglichst hoch zu halten. Mit diesen Maßnahmen wird sichergestellt, dass möglichst wenig Blindleistung in der Kühlanlage erzeugt wird und nur im Fall einer effektiven Kühlung der einzelnen Räume tatsächlich auch nur das erforderliche Kühlmittel durch das jeweilige Kühlaggregat strömt.

Das bekannte Rücklauftemperaturregelventil weist jedoch einerseits nur die beschriebene Rücklauftemperaturregelfunktion auf. Weitere Absperr- oder Steuerfunktionen sind mit dem bekannten Rücklauftemperaturregelventil nicht darstellbar. Darüber hinaus ist keine veränderliche Voreinstellung des Rücklauftemperaturregelventiles beschrieben. Schließlich weist das bekannte Rücklauftemperaturregelventil auch keine Maßnahmen zur Ermittlung des tatsächlichen Kühlmitteldurchflusses am Rücklauftemperaturregelventil auf.

Aus der DE 100 64 620 A1 ist ein Flüssigkeitsventil für Heiz- und/oder Kühlanlagen bekannt, dessen Ventilkörper mit einem Regelventilsitz zusammenwirkt. Zur Voreinstellung der Durchflussmenge ist eine Voreinstellvorrichtung mit einer einstellbaren Drosselblende vorgesehen. Die WO 00/06931 zeigt ein Ventil für Warmwasseranlagen, welches ebenfalls neben einer Regelventilanordnung eine drosselartige Voreinstellung des Durchflusses mittels eines weiteren Verschlussstückes aufweist.

Die Erfindung hat die Aufgabe, ein bekanntes Rücklauftemperaturregelventil dahingehend weiter zu bilden, das es auf Grund weiterer Mess-, Steuer- und Voreinstellfunktionen universeller einsetzbar ist und zugleich eine möglichst einfache Konstruktion aufweist.

Diese Aufgabe wird erfindungsgemäß dadurch gelöst, dass ein dem ersten Ventilsitz in Strömungsrichtung des Kühlmittels nachgeordneter zweiter Ventilsitz im Gehäuse angeordnet ist, der mit einem in Öffnungsrichtung federbelasteten zweiten Ventilkörper zusammenwirkt und dass der zweite Ventilkörper einen Betätigungsstift aufweist, der durch eine Absperr- und/oder Voreinstellkappe, einen Stellantrieb oder einen Thermostatventilkopf betätigbar ist.

Mit diesen erfindungsgemäßen Maßnahmen wird ein Rücklauftemperaturregelventil geschaffen, das zusätzlich zu der bekannten Funktion der Rücklauftemperaturregelung eine weitere Ventilfunktion bereitstellt. Dabei stört diese weitere Ventilfunktion die eigentliche Funktion des Rücklauftemperaturregelventiles nicht, weil die zweite Ventilanordnung, gebildet aus dem zweiten Ventilsitz und dem zweiten Ventilkörper, der ersten Rücklauftemperaturregelventilfunktion nachgeordnet ist.

Diese zweite Ventilfunktion kann dabei für unterschiedliche Zwecke verwendet werden. Die einfachste Möglichkeit stellt die Absperrung des Rücklauftemperaturregelventiles beispielsweise für Zwecke der Wartungsarbeiten an der Kühlanlage dar. Es kann jedoch auch eine grundlegende Voreinstellung des Kühlmitteldurchflusses durch das Rücklauftemperaturregelventil dargestellt werden. Schließlich ist zusätzlich zur Rücklauftemperaturregelung durch Verwendung eines Stellantriebs oder auch eines gegenüber Heizungsanlagen umgekehrt wirkenden Thermostatventilkopfes eine effektive Raumtemperaturregelung in dem zu kühlendem Raum zusätzlich zur Rücklauftemperaturregelung möglich. Auch Kombinationen der beschriebenen Ventilfunktionen sind mit dem erfindungsgemäßen Rücklauftemperaturregelventil problemlos darstellbar.

Mit dem erfindungsgemäßen Rücklauftemperaturregelventil wird also eine Ventilanordnung geschaffen, die mit einfachen konstruktiven Maßnahmen in einem gemeinsamen Gehäuse mittels zweier Ventilanordnungen zusätzlich zur Rücklauftemperaturregelung weitere Ventilfunktionen ermöglicht. Dies vereinfacht auch den konstruktiven Gesamtaufbau der jeweiligen Kühlanlage in der das erfindungsgemäße Rücklauftemperaturregelventil eingesetzt wird.

Vorteilhafte Ausgestaltungen und Weiterbildungen des beanspruchten Rücklauftemperaturregelventiles ergeben sich aus den Unteransprüchen und werden im Folgenden anhand der Unteransprüche näher erläutert.

Es ist besonders vorteilhaft, wenn der zweite Ventilsitz und der zweite Ventilkörper koaxial zum ersten Ventilsitz und zum ersten Ventilkörper angeordnet werden, weil mit dieser konstruktiven Ausbildung des Rücklauftemperaturregelventiles eine Konstruktion geschaffen wird, die die gemeinsame Anordnung beider Ventilfunktionen in einem Gehäuse besonders Platz sparend ermöglicht. Um die strömungstechnische Nachordnung der zweiten Ventilanordnung nach der ersten Ventilanordnung zur Rücklauftemperaturregelung zu gewährleisten, kann in diesem Zusammenhang besonders vorteilhaft der zweite Ventilsitz und der zweite Ventilkörper einen größeren Durchmesser aufweisen, als der erste Ventilsitz und der erste Ventilkörper.

Ebenfalls in diesem Zusammenhang ist es besonders vorteilhaft, wenn zwischen dem ersten Ventilkörper und dem zweiten Ventilkörper eine einzige Schraubendruckfeder zur Herstellung sämtlicher konstruktiv notwendiger Federbelastungen angeordnet ist. Wie bereits vorher erläutert, wird der erste Ventilkörper zur Rücklauftemperaturbegrenzung in Schließrichtung federbelastet, wogegen der zweite Ventilkörper zur Darstellung der weiteren Ventilfunktionen in Öffnungsrichtung federbelastet ist. Dies ermöglicht die Darstellung der beiden beschriebenen Federbelastungen durch eine einzige Schraubendruckfeder, die zwischen den beiden genannten Ventilkörpern angeordnet ist. Dies vereinfacht die mechanische Konstruktion des beanspruchten Rücklauftemperaturregelventiles grundlegend.

Die Ventilsitze und/oder die Ventilkörper können jeweils aus Metall und/oder Kunststoff bestehen. Es sind auch Kombinationen eines Metallventilsitzes mit einem Kunststoffventilsitz oder eines Metallventilkörpers mit einem Kunststoffventilkörper möglich. Besonders vorteilhaft können die Ventilsitze jedoch gemeinsam einstückig ausgebildet sein, wobei in diesem Fall beide Ventilsitze entweder aus Kunststoff oder aus Metall bestehen. In diesem Zusammenhang kann insbesondere der zweite Ventilsitz auch aus einem gummielastischen Weichstoff bestehen, wobei das gummielastische Weichstoffmaterial des zweiten Ventilsitzes durch einen ersten Ventilsitz aus Metall oder Kunststoff in dem Gehäuse fixiert wird.

Um die Verwendung des beanspruchten Rücklauftemperaturregelventiles bei sehr hohen Differenzdrücken zu ermöglichen, kann besonders vorteilhaft eine so genannte Druckentlastung der Ventilkörper vorgesehen werden. Diese Druckentlastung bezüglich des ersten Ventilkörpers für die Funktion der Rücklauftemperaturregelung kann besonders vorteilhaft dadurch dargestellt werden, dass die Ventilkörper becherförmig gestaltet sind und gemeinsam einen ersten Hohlraum bilden, welcher über einen ersten Kühlmittelführungsschlitz Druck leitend mit dem Zulaufstutzen verbunden ist, so dass letztlich auf beiden Seiten des ersten Ventilkörpers der selbe Druck wirkt. Die entsprechende Druckentlastung des zweiten Ventilkörpers für die weitere Ventilfunktion kann besonders vorteilhaft dadurch dargestellt werden, dass ein den zweiten Ventilkörper tragendes Ventiloberteil gemeinsam mit dem zweiten Ventilkörper einen zweiten Hohlraum bildet, welcher über einen zweiten Kühlmittelführungsschlitz Druck leitend mit dem ersten Hohlraum verbunden ist, so dass auch auf beiden Seiten des zweiten Ventilkörpers für die weitere Ventilfunktion die selben Druckverhältnisse vorliegen. Diese vorgeschlagene Druckentlastung für einen oder beide Ventilkörper ist so effektiv, dass das beanspruchte Rücklauftemperaturregelventil bei sehr unterschiedlichen Differenzdruckniveaus verwendbar ist, ohne das es zu einer Verschiebung der Regelkennlinie insbesondere für die Funktion der Rücklauftemperaturregelung kommt.

Zur Voreinstellung der Rücklauftemperaturen für die Funktion der Rücklauftemperaturregelung kann das Dehnstoffelement besonders vorteilhaft in einem Einstellstutzen angeordnet sein und durch eine mittels Gewinde gegenüber dem Einstellstutzen verdrehbare Einstellspindel zur Voreinstellung der Rücklauftemperatur axial verschiebbar ausgebildet sein. Mit diesen Maßnahmen wird durch Verdrehung der Einstellspindel gegenüber dem Einstellstutzen und damit durch axiale Verlagerung der Einstellspindel auch das Dehnstoffelement gemeinsam mit dem ersten Ventilkörper derart axial verlagert, dass abhängig von der gemessenen Temperatur am Dehnstoffelement ein vorgegebener Solldurchfluss gewährleistet ist.

In diesem Zusammenhang kann zur Durchführung der Grundjustage des Rücklauftemperaturregelventiles in der Produktion und Montage in der Einstellspindel ein Justiergewindestift angeordnet sein, der mit der Einstellspindel zur Justage der Grundeinstellung des Dehnstoffelementes mittels eines weiteren Gewindes verbunden ist. Die Verdrehung des Justiergewindestiftes gegenüber der Einstellspindel sollte nur mit einem Spezialwerkzeug möglich sein, um unerwünschte Dejustagen am Montageort des Rücklauftemperaturregelventiles zu vermeiden. Zur Durchführung der durchaus am Ort der Montage des Rücklauftemperaturregelventiles durchzuführenden Voreinstellung der Durchflussmenge kann besonders vorteilhaft eine Einstellkappe mit der Einstellspindel drehfest verbunden sein, welche mindestens ein Einstellungsanzeigefenster mit Kennzeichnungen aufweist, die mit einer Gehäusemarkierung zur Anzeige der Voreinstellung der Rücklauftemperatur zusammenwirkt. So ist es dem Kühlanlagen Installateur vor Ort möglich, diese Voreinstellung präzise auf die gewünschte Rücklauftemperatur durchzuführen.

Zur Darstellung der Funktion der Durchflussmessung am Rücklauftemperaturregelventil kann das Gehäuse besonders vorteilhaft zusätzlich eine den Ventilsitzen in Strömungsrichtung des Kühlmittels vor- oder nachgeordnete Messblende zur Durchflussmessung und einen der Messblende vorgeschalteten Druckmessanschluss und einen der Messblende nachgeschalteten Druckmessanschluss aufweisen. Die Methode der Durchflussmessung mittels Messblende und derartiger Druckmessanschlüsse ist grundsätzlich bekannt. Die Integration einer Einrichtung zur Durchflussmessung in ein Rücklauftemperaturregelventil ist jedoch in dem beschriebenen Zusammenhang neu und besonders vorteilhaft, weil mit diesen Maßnahmen eine weitere Messfunktion in ein einziges Gehäuse eines Rücklauftemperaturregelventiles integriert wird. Die Messblende kann dabei separat ausgebildet und flüssigkeitsdichtend im Gehäuse befestigt sein, um die spanabhebende Bearbeitung von Hinterschneidungen bei der Herstellung des Ventils zu vermeiden.

Schließlich ist es vorteilhaft zur Abdichtung der Ventilkörper gegeneinander und/oder gegen das Ventiloberteil und/oder in der Einstellspindel gegenüber den Einstellstutzen und/oder des Justiergewindestiftes gegenüber der Einstellspindel reibungsarme Dichtungen wie O-Ringe vorzusehen, die auch bei einer axialen Verlagerung der Teile gegeneinander die notwendige Dichtwirkung sicherstellen.

Ein Ausführungsbeispiel eines anspruchgemäßen Rücklauftemperaturregelventiles ist in den Zeichnungen dargestellt und wird im Folgenden anhand der Zeichnungen näher erläutert.

Es zeigen
- Fig. 1: eine Außenansicht des Rücklauftemperaturregelventiles,
- Fig. 2: einen Axialschnitt durch das Rücklauftemperaturregelventil gemäß Fig. 1,
- Fig. 3: einen Schnitt durch das Rücklauftemperaturregelventil gemäß Fig. 2, gemäß der Schnittebene A-A,
- Fig. 4: einen Schnitt durch das Rücklauftemperaturregelventil gemäß Fig. 2, gemäß der Schnittebene B-B und
- Fig. 5: einen weiteren Axialschnitt durch das Rücklauftemperaturregelventil gemäß Fig. 1, senkrecht zu der Schnittebene des Rücklauftemperaturregelventiles gemäß Fig. 2.
- Fig. 6: einen Axialschnitt durch ein anderes Rücklauftemperaturregelventil mit einer separaten Messblende zur Durchflussmessung.

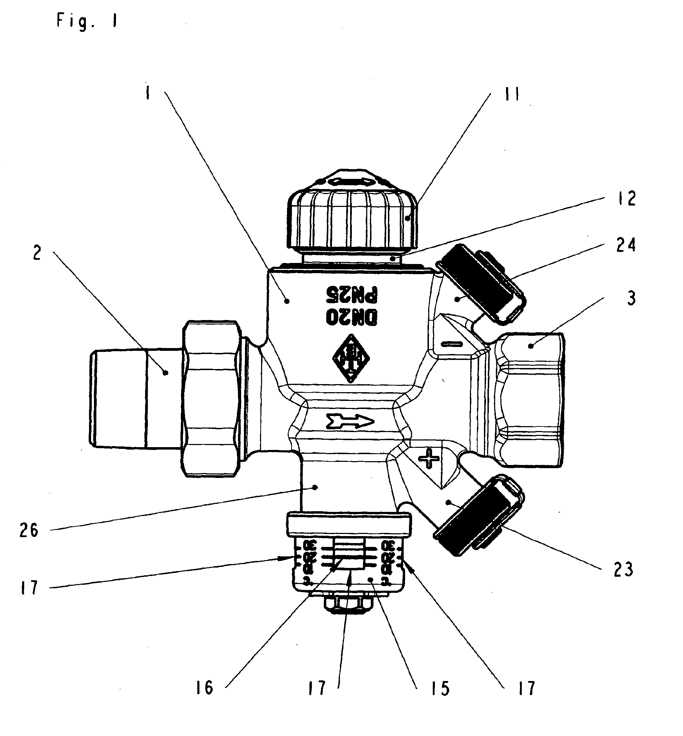

In der Fig. 1 weist das Rücklauftemperaturregelventil ein Gehäuse (1) auf. Das Gehäuse (1) weist einen Zulaufstutzen (2) für das Kühlmittel und einen Ablaufstutzen (3) für das Kühlmittel auf. Der Zulaufstutzen (2) ist dabei mit dem Kühlaggregat des jeweils zu kühlenden Raumes und der Ablaufstutzen (3) ist mit der jeweiligen Kühlmittelablaufleitung strömungsleitend verbunden. Neben den beiden genannten Stutzen weist das Gehäuse (1) einen Einstellstutzen (26) auf, dessen in der Fig. 1 unteres Ende durch eine Einstellkappe (15) abgedeckt ist, welche mehrere Einstellungsanzeigefenster (17) trägt. Zwischen den Einstellungsanzeigefenstern (17) sind Kennzeichnungen in °Celsius angeordnet, die zur Anzeige der Voreinstellung der Kühlmittelrücklauftemperatur mit einer Gehäusemarkierung (16) zusammenwirken.

Auf der dem Einstellstutzen (26) gegenüber liegenden Seite des Gehäuses (1) ist ein in das Gehäuse eingeschraubtes Ventiloberteil (12) erkennbar, dessen in der Fig. 1 oberes Ende durch eine Absperr- und Voreinstellkappe (11) abgedeckt ist.

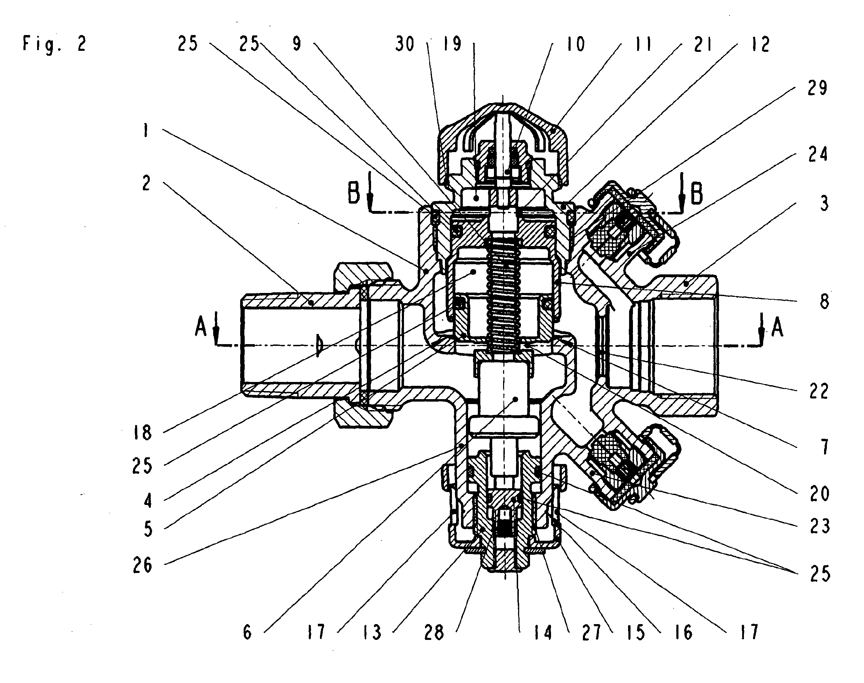

Schließlich erkennt man in der Fig. 1 noch einen mit + gekennzeichneten Messanschluss (23), der strömungstechnisch vor einer Messblende (22) in der Fig. 2 angeordnet ist. Ein weiterer mit - gekennzeichneter Messanschluss (24) ist strömungstechnisch der Messblende (22) in der Fig. 2 nachgeschaltet. Diese Messanschlüsse dienen der Druckmessung und ermöglichen im Zusammenwirken mit der Messblende (22) in Fig. 2 eine Durchflussmessung an dem Rücklauftemperaturregelventil.

In der Fig. 2 sind gleiche oder gleich wirkende Einrichtungsteile wie in der Fig. 1 mit denselben Bezugszeichen wie in der Fig. 1 dargestellt. Auf Grund der Schnittdarstellung in der Fig. 2 sind nun weitere Funktionsteile erkennbar. Zu diesen Funktionsteilen gehört ein erster Ventilsitz (4), der mit einem ersten Ventilkörper (5) zusammenwirkt. Der erste Ventilkörper (5) ist durch eine Schraubendruckfeder (9) in Schließrichtung federbelastet, die sich andererseits an einem zweiten Ventilkörper (8) abstützt.

Dieser erste Ventilkörper (5) ist durch ein Dehnstoffelement (6), das seine effektive Länge abhängig von der gemessenen Kühlmitteltemperatur ändert, vom ersten Ventilsitz (4) abhebbar. Die Abhebung des ersten Ventilsitzes (4) vom ersten Ventilkörper (5) erfolgt dabei gegen die Schließkraft der Schraubendruckfeder (9).

Der zweite Ventilkörper (8), an den sich die Schraubendruckfeder (9) abstützt, wird durch die Schraubendruckfeder (9) in Öffnungsrichtung federbelastet und wirkt mit einem zweiten Ventilsitz (7) zusammen.

Der zweite Ventilkörper (8) und der zweite Ventilsitz (7) weisen, wie der erste Ventilsitz (4) und der erste Ventilkörper (5) einen im wesentlichen runden Querschnitt auf, wobei der zweite Ventilsitz (7) und der zweite Ventilkörper (8) koaxial zu dem ersten Ventilsitz (4) und dem ersten Ventilkörper (5) angeordnet sind und diesen damit koaxial umgeben.

Die Ventilkörper (5, 8) sind dabei derart becherförmig gestaltet, dass sie gemeinsam einen ersten Hohlraum (18) bilden, der über einen ersten Kühlmittelführungsschlitz (20) derart mit dem Zulaufstutzen (2) des Gehäuses (1) verbunden ist, dass auf beiden Seiten des ersten Ventilkörpers (5) der selbe Kühlmitteldruck wirkt und in sofern auch bei hohen Druckdifferenzen des Kühlmittels eine sichere Funktion des Rücklauftemperaturregelventiles gewährleistet ist.

Der zweite Ventilkörper (8) ist axial verschiebbar in einem Ventiloberteil (12) gelagert und bildet gemeinsam mit dem Ventiloberteil (12) einen zweiten Hohlraum (19), welcher über einen zweiten Kühlmittelführungsschlitz (21) derart strömungsleitend mit dem ersten Hohlraum (18) verbunden ist, dass auch auf beiden Seiten des zweiten Ventilkörpers (8) der selbe Kühlmitteldruck wirkt und auch die weitere Ventilfunktion des erfindungsgemäßen Rücklauftemperaturregelventiles bei hohen Differenzdrücken des Kühlmittels gewährleistet ist.

Die eigentliche Betätigung des zweiten Ventilkörpers (8) erfolgt dabei durch einen Betätigungsstift (10) in dem Ventiloberteil (12) auf das die Absperr- und Voreinstellkappe (11) oder alternativ ein Stellantrieb aufgeschraubt werden kann.

Die eigentliche Temperaturvoreinstellung des Kühlmittels erfolgt gemäß Fig. 2 durch eine Einstellspindel (13), die mittels eines Gewindes (27) in den Einstellstutzen (26) eingeschraubt ist. Durch Verdrehen der Einstellspindel (13) gegenüber dem Einstellstutzen (26) wird das Dehnstoffelement (6) und damit der erste Ventilkörper (5) gegen die Kraft der Schraubendruckfeder (9) axial verlagert. Die Verdrehung der Einstellspindel (13) erfolgt dabei durch Verdrehen der Einstellkappe (15), die drehfest mit der Einstellspindel (13) verbunden ist.

Zur werkseitigen Justage der Grundeinstellung des Rücklauftemperaturregelventiles ist in der Fig. 2 ein Justiergewindestift (14) vorgesehen, der über ein weiteres Gewinde (28) in die Einstellspindel (13) eingeschraubt ist und mittels eines Spezialwerkzeuges gegenüber der Einstellspindel (13) verdreht werden kann. Das Dehnstoffelement (6) stützt sich dabei über den Justiergewindestift (14) und die Einstellspindel (13) an dem Einstellstutzen (26) des Gehäuses (1) ab.

Weitere Gewindeverbindungen finden sich zur notwendigen aufbauenden Montage des Rücklauftemperaturregelventiles mit dem Gewinde (29) zwischen dem Gehäuse (1) und dem Ventiloberteil (12) und mit dem Gewinde (30) zwischen dem Ventiloberteil (12) und der Absperr- und Voreinstellkappe (11) bzw. einem alternativ verwendbaren Stellantrieb oder Thermostatventilkopf.

Schließlich ist in der Fig. 2 noch einmal deutlich die Anordnung zur Durchflussmessung an dem Rücklauftemperaturregelventil dargestellt. Mit der Bezugszahl (22) ist die Messblende zur Durchflussmessung gekennzeichnet, die strömungstechnisch den vor genannten Ventilanordnungen nachgeschaltet ist. Vor der Messblende (22) zur Durchflussmessung ist der Messanschluss (23) deutlich erkennbar vorgesehen. Der Messanschluss (24) ist strömungstechnisch der Messblende (22) nachgeschaltet.

Die Abdichtung der verschiedenen Funktionsteile gegeneinander erfolgt bei dem vorliegenden Rücklauftemperaturregelventil mittels O-Ringdichtungen (25). Diese O-Ringdichtungen (25) finden sich zwischen den Ventilkörpern (5, 8), zwischen dem zweiten Ventilkörper (8) und dem Ventiloberteil (12), zwischen der Einstellspindel (13) und dem Justiergewindestift (14) und zwischen der Einstellspindel (13) und dem Einstellstutzen (26), um ein Austreten der Kühlflüssigkeit aus dem Rücklauftemperaturregelventil zu vermeiden. Auch zwischen dem Ventiloberteil (12) und dem Gehäuse (1) ist eine weitere O-Ringdichtung (25) vorgesehen. Schließlich finden sich noch weitere O-Ringdichtungen in dem Ventiloberteil (12), das insoweit jedoch dem Stand der Technik entsprechend aufgebaut ist.

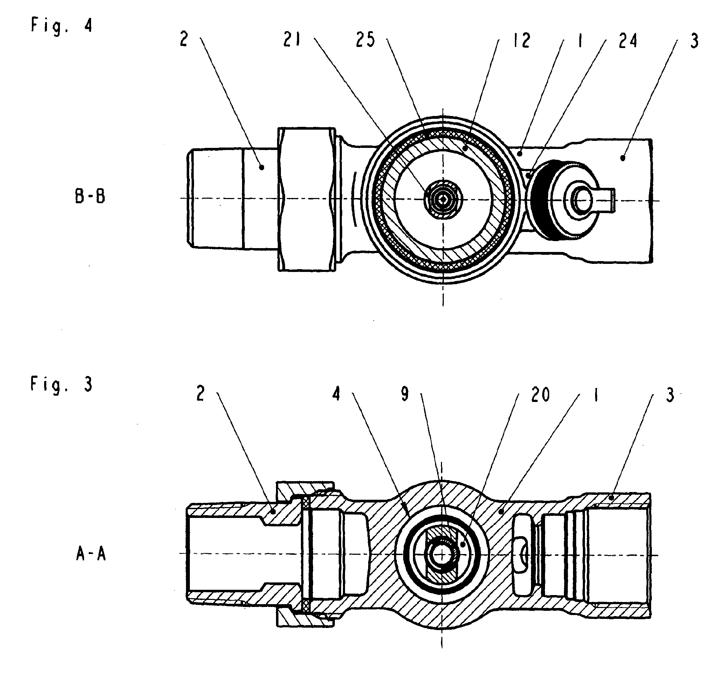

In der Fig. 3 erkennt man in der dortigen Schnittdarstellung gemäß der Schnittebene A-A deutlich die Ausbildung des ersten Kühlmittelführungsschlitzes (20) zur strömungsleitenden Verbindung zwischen den Hohlräumen gebildet durch den Zulaufstutzen (2) und dem ersten Hohlraum (18) als Bestandteil des ersten Ventilkörpers (5). Diese Schlitze (20) sind letztlich Ausfräsungen des ersten Ventilkörpers (5), die die Kühlmittelführung vom Zulaufstutzen (2) zum ersten Hohlraum (18) und damit den gewünschten Druckausgleich gewährleisten.

In der Fig. 4, die ebenso wie die Fig. 3 mit denselben Bezugszeichen wie in der Fig. 2 versehen ist, sind die zweiten Kühlmittelführungsschlitze (21) als Ausfräsungen des zweiten Ventilkörpers (8) deutlich erkennbar. Diese zweiten Kühlmittelführungsschlitze (21) gewährleisten die Kühlmittelführung und damit den Druckausgleich zwischen dem ersten Hohlraum (18) und dem zweiten Hohlraum (19) in der Fig. 2.

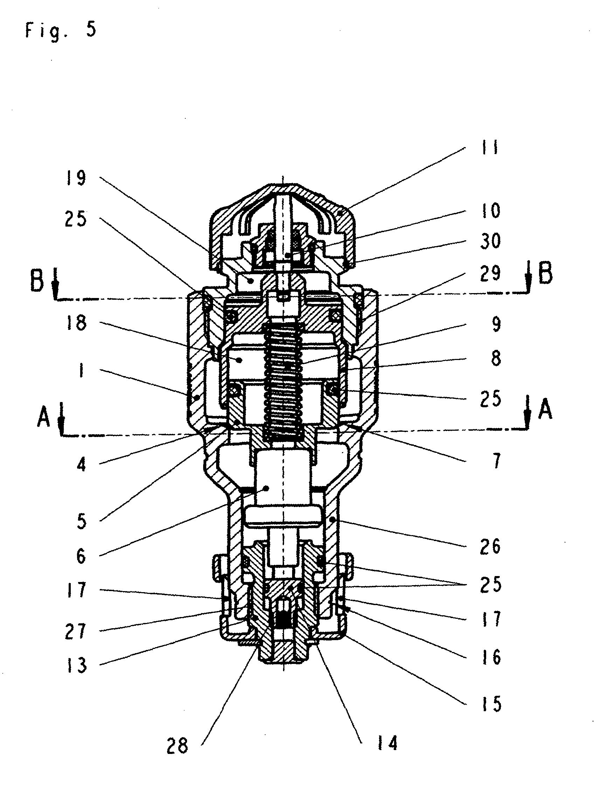

Das es sich bei den genannten Kühlmittelführungsschlitzen (20, 21) um teilweise Ausfräsungen an den Ventilkörpern (5, 8) handelt, ist auch in der Fig. 5 besonders deutlich erkennbar, bei der im Übrigen gleiche oder gleich wirkende Einrichtungsteile wie in der Fig. 2 mit denselben Bezugszeichen gekennzeichnet sind.

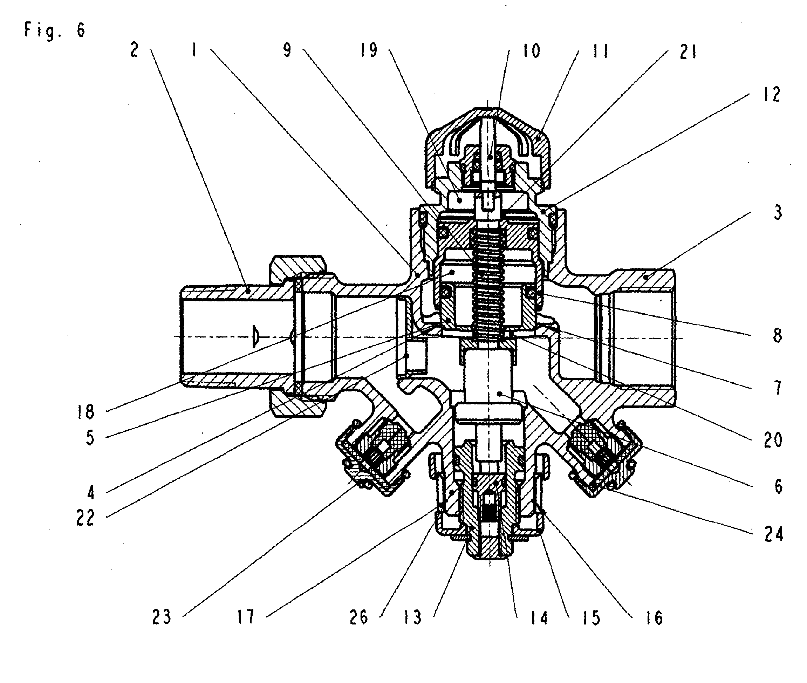

In der Fig. 6, die mit denselben Bezugszeichen versehen ist wie Fig. 2, ist die Anordnung der Messblende (22') in Strömungsrichtung vor den Rücklaufregeleinrichtungen dargestellt. Besonders vorteilhaft ist es zudem wenn die Messblende(22'), wie hier dargestellt, separat gefertigt und flüssigkeitsdichtend in das Gehäuse (1) eingebracht wird. Die Messanschlüsse (23, 24) sind zudem an einer Seite neben dem Einstellstutzen (26) angebracht. Diese Anordnung erleichtert den Anschluss der Messeinrichtung und stellt eine weitere vorteilhafte Anordnung dar.

## Patentansprüche

1. Rücklauftemperaturregelventil für Kühlanlagen mit einem Gehäuse (1), mit einem Zulaufstutzen (2), mit einem Ablaufstutzen (3), mit einem im Gehäuse (1) angeordneten ersten Ventilsitz (4), der mit einem in Schließrichtung federbelasteten ersten Ventilkörper (5) zusammenwirkt und mit einem Dehnstoffelement (6), das mit steigender Temperatur eines Kühlmittels den Ventilkörper (5) vom Ventilsitz (4) abhebt, **dadurch gekennzeichnet, dass** ein dem ersten Ventilsitz (4) in Strömungsrichtung des Kühlmittels nachgeordneter zweiter Ventilsitz (7) im Gehäuse (1) angeordnet ist, der mit einem in Öffnungsrichtung federbelasteten zweiten Ventilkörper (8) zusammenwirkt und dass der zweite Ventilkörper (8) einen Betätigungsstift (10) aufweist, der durch eine Absperr- und/oder Voreinstellkappe (11), einen Stellantrieb oder einen Thermostatventilkopf betätigbar ist.

2. Rücklauftemperaturregelventil nach Anspruch 1, **dadurch gekennzeichnet, dass** der zweite Ventilsitz (7) und der zweite Ventilkörper (8) koaxial zum ersten Ventilsitz (4) und zum ersten Ventilkörper (5) angeordnet sind.

3. Rücklauftemperaturregelventil nach Anspruch 2, **dadurch gekennzeichnet, dass** der zweite Ventilsitz (7) und der zweite Ventilkörper (8) einen größeren Durchmesser aufweisen, als der erste Ventilsitz (4) und der erste Ventilkörper (5).

4. Rücklauftemperaturregelventil nach Anspruch 2, **dadurch gekennzeichnet, dass** zwischen dem ersten Ventilkörper (5) und dem zweiten Ventilkörper (8) eine Schraubendruckfeder (9) zur Herstellung der Federbelastungen angeordnet ist.

5. Rücklauftemperaturregelventil nach Anspruch 1, **dadurch gekennzeichnet, dass** die Ventilsitze (4, 7) und/oder die Ventilkörper (5, 8) aus Metall und/oder Kunststoff bestehen.

6. Rücklauftemperaturregelventil nach Anspruch 1, **dadurch gekennzeichnet, dass** die Ventilsitze (4, 7) gemeinsam einstückig ausgebildet sind.

7. Rücklauftemperaturregelventil nach Anspruch 1, **dadurch gekennzeichnet, dass** der zweite Ventilsitz (7) aus gummielastischem Weichstoff besteht.

8. Rücklauftemperaturregelventil nach Anspruch 2, **dadurch gekennzeichnet, dass** die Ventilkörper (5, 8) becherförmig gestaltet sind und gemeinsam einen ersten Hohlraum (18) bilden, welcher über einen ersten Kühlmittelführungsschlitz (20) Druck leitend mit dem Zulaufstutzen (2) verbunden ist.

9. Rücklauftemperaturregelventil nach Anspruch 8, **dadurch gekennzeichnet, dass** ein den zweiten Ventilkörper (8) tragendes Ventiloberteil (12) gemeinsam mit dem zweiten Ventilkörper (8) einen zweiten Hohlraum (19) bildet, welcher über einen zweiten Kühlmittelführungsschlitz (21) Druck leitend mit dem ersten Hohlraum (18) verbunden ist.

10. Rücklauftemperaturregelventil nach Anspruch 1, **dadurch gekennzeichnet, dass** das Dehnstoffelement (6) in einem Einstellstutzen (26) angeordnet und durch eine mittels Gewinde (27) gegenüber dem Einstellstutzen (26) verdrehbare Einstellspindel (13) zur Voreinstellung der Rücklauftemperatur axial verschiebbar ist.

11. Rücklauftemperaturregelventil nach Anspruch 10, **dadurch gekennzeichnet, dass** in der Einstellspindel (13) ein Justiergewindestift (14) angeordnet und mit diesem zur Justage der Grundeinstellung des Dehnstoffelementes (6) mittels eines weiteren Gewindes (28) verbunden ist.

12. Rücklauftemperaturregelventil nach Anspruch 10, **dadurch gekennzeichnet, dass** eine Einstellkappe (15) mit der Einstellspindel (13) drehfest verbunden ist welche mindestens ein Einstellungsanzeigefenster (17) mit Kennzeichnungen aufweist, die mit einer Gehäusemarkierung (16) zur Anzeige der Voreinstellung zusammen wirkt.

13. Rücklauftemperaturregelventil nach Anspruch 1, **dadurch gekennzeichnet, dass** das Gehäuse (1) eine den Ventilsitzen (4, 7) in Strömungsrichtung des Kühlmittels nachgeordnete Messblende (22) zur Durchflussmessung und einen der Messblende (22) vorgeschalteten Druckmessanschluss (23) und einen der Messblende (22) nachgeschalteten Druckmessanschluss (24) aufweist.

14. Rücklauftemperaturregelventil nach Anspruch 1, **dadurch gekennzeichnet, dass** das Gehäuse (1) eine den Ventilsitzen (4, 7) in Strömungsrichtung des Kühlmittels vorgeordnete Messblende (22') zur Durchflussmessung und einen der Messblende (22) vorgeschalteten Druckmessanschluss (23) und einen der Messblende (22) nachgeschalteten Druckmessanschluss (24) aufweist.

15. Rücklauftemperaturregelventil nach Anspruch 13 oder Anspruch 14, **dadurch gekennzeichnet, dass** die Messblende (22 oder 22') separat ausgebildet und im Gehäuse (1) flüssigkeitsdichtend befestigt ist.

16. Rücklauftemperaturregelventil nach Anspruch 13 oder Anspruch 14, **dadurch gekennzeichnet, dass** die Druckmessanschlüsse (23 und 24) beide neben dem Einstellstutzen (26) oder dem Ventiloberteil (12) angeordnet sind.

17. Rücklauftemperaturregelventil nach Anspruch 1, **dadurch gekennzeichnet, dass** zur Abdichtung der Ventilkörper (5, 8) gegeneinander und/oder gegen das Ventiloberteil (12) und/oder der Einstellspindel (13) gegenüber dem Einstellstutzen (26) und/oder des Justiergewindestiftes (14) gegenüber der Einstellspindel (13) O-Ringdichtungen (25) vorgesehen sind,

## Claims

1. Return temperature control valve for cooling systems with a housing (1), with an inlet socket (2), with an outlet socket (3), with a first valve seat (4) arranged in the housing (1) that interacts with a first valve body (5) and with an expansion element (6) that raises the valve body (5) from the valve seat (4) as the temperature of the coolant rises, characterised such that a second valve seat (7) downstream of the first valve seat (4) in the direction of coolant flow that interacts with a second valve body (8) spring-loaded in opening direction is arranged in the housing (1) and that the second valve body (8) features an actuating pin (10) which can be actuated by a shut-off and/or presetting cap (11), an actuator or a thermostatic valve head.

2. Return temperature control valve in accordance with Claim 1, characterised such that the second valve seat (7) and the second valve body (8) are arranged coaxially with respect to the first valve seat (4) and to the first valve body (5).

3. Return temperature control valve in accordance with Claim 2, characterised such that the second valve seat (7) and the second valve body (8) have a larger diameter than the first valve seat (4) and the first valve body (5).

4. Return temperature control valve in accordance with Claim 2, characterised such that a helical compression spring (9) for creating the spring loads is arranged between the first valve body (5) and the second valve body (8).

5. Return temperature control valve in accordance with Claim 1, characterised such that valve seats (4, 7) and/or valve bodies (5, 8) are made from metal and/or plastic.

6. Return temperature control valve in accordance with Claim 1, characterised such that the valve seats (4, 7) are together designed as one piece.

7. Return temperature control valve in accordance with Claim 1, characterised such that the second valve seat (7) is made from soft elastic material.

8. Return temperature control valve in accordance with Claim 2, characterised such that the valve bodies (5, 8) are cup-shaped and together form the first cavity (18) which is connected in a pressure-conducting manner via the first coolant guide slot (20) to the inlet socket (2).

9. Return temperature control valve in accordance with Claim 8, characterised such that a valve insert (12) supporting the second valve body (8) together with the second valve body (8) forms a second cavity (19) which is connected in a pressure-conducting manner via a second coolant guide slot (21) to the first cavity (18).

10. Return temperature control valve in accordance with Claim 1, characterised such that the expansion element (6) is arranged in a setting socket (26) and can be shifted axially by a setting spindle (13) that can be turned by means of thread (27) opposite the setting socket (26) to preset the return temperature.

11. Return temperature control valve in accordance with Claim 10, characterised such that adjustment set screw (14) is arranged in and connected to the adjustment spindle (13) to adjust the basic setting of the expansion element (6) by means of a further thread (28).

12. Return temperature control valve in accordance with Claim 10, characterised such that a setting cap (15) is connected to and turns with the setting spindle (13) which features at least one setting indicator window (17) with markings that interact with a housing marking (16) to show the presetting.

13. Return temperature control valve in accordance with Claim 1, characterised such that the housing (1) features a measuring orifice (22) downstream of the valve seats (4, 7) in direction of coolant flow for measuring flow rate and a measuring orifice (22) upstream of the pressure measuring connection (23) and a measuring orifice (22) downstream of the pressure measuring connection (24).

14. Return temperature control valve in accordance with Claim 1, characterised such that the housing (1) features a measuring orifice (22') upstream of the valve seats (4, 7) in direction of coolant flow for measuring flow rate and a measuring orifice (22) upstream of the pressure measuring connection (23) and a measuring orifice (22) downstream of the pressure measuring connection (24).

15. Return temperature control valve in accordance with Claim 13 or Claim 14, characterised such that the measuring orifice (22 or 22') are separate and are mounted in a liquid-sealing manner in the housing (1).

16. Return temperature control valve in accordance with Claim 13 or Claim 14, characterised such that the pressure measuring connections (23 and 24) are both arranged next to the setting socket (26) or the valve insert (12).

17. Return temperature control valve in accordance with Claim 1, characterised such that O-ring seals (25) are fitted to seal the valve bodies (5, 8) from each other and/or from the valve insert (12) and/or the setting spindle (13) opposite the setting socket (26) and/or the adjustment set screw (14) opposite the setting spindle (13).

## Revendications

1. Régulateur de température de retour pour installations frigorifiques comprenant un boîtier (1), un raccord d'arrivée (2), un raccord d'évacuation (3), un premier siège de soupape (4) dans le boîtier (1), qui interagit avec un premier corps de soupape (5) commandé par ressort dans le sens de la fermeture et comprenant un élément thermostatique (6) qui soulève le corps de soupape (5) du siège de soupape (4) quand la température du réfrigérant augmente; ce régulateur est **caractérisé par le fait qu'**un deuxième siège de soupape (7) en aval du premier siège de soupape (4) dans le sens de l'écoulement du réfrigérant placé dans le boîtier (1) interagit avec un deuxième corps de soupape (8) commandé par ressort dans le sens de l'ouverture, et que le deuxième corps de soupape (8) est doté d'une tige de commande (10) qui peut être actionnée par un bouchon de fermeture ou de préréglage (11), un servomoteur ou une tête de soupape thermostatique.

2. Régulateur de température de retour selon la revendication 1, **caractérisé par le fait que** le deuxième siège de soupape (7) et le deuxième corps de soupape (8) sont placés coaxialement par rapport au premier siège de soupape (4) et au premier corps de soupape (5).

3. Régulateur de température de retour selon la revendication 2, **caractérisé par le fait que** le diamètre du deuxième siège de soupape (7) et du deuxième corps de soupape (8) est supérieur à celui du premier siège de soupape (4) et du premier corps de soupape (5).

4. Régulateur de température de retour selon la revendication 2, **caractérisé par le fait qu'**un ressort hélicoïdal de compression (9) est placé entre le premier corps de soupape (5) et le deuxième corps de soupape (8) pour la production de charges élastiques.

5. Régulateur de température de retour selon la revendication 1, **caractérisé par le fait que** les sièges de soupape (4, 7) ou les corps de soupape (5, 8) sont composés de métal ou de plastique.

6. Régulateur de température de retour selon la revendication 1, **caractérisé par le fait que** les sièges de soupape (4, 7) sont d'une pièce.

7. Régulateur de température de retour selon la revendication 1, **caractérisé par le fait que** le deuxième siège de soupape (7) est en matériau élastique mou.

8. Régulateur de température de retour selon la revendication 2, **caractérisé par le fait que** les corps de soupape (5, 8) sont en forme de coupe et forment ensemble une première cavité (18) qui est reliée par une première fente de guidage du réfrigérant (20) au raccord d'arrivée (2) de manière à conduire la pression.

9. Régulateur de température de retour selon la revendication 8, **caractérisé par le fait qu'**une partie supérieure de soupape (12) supportant le deuxième corps de soupape (8) forme avec le deuxième corps de soupape (8) une deuxième cavité (19) qui est reliée à la première cavité (18) par une deuxième fente de guidage du réfrigérant (21) de manière à conduire la pression.

10. Régulateur de température de retour selon la revendication 1, **caractérisé par le fait que** l'élément thermostatique (6) est placé dans une tubulure de réglage (26) et peut être déplacé axialement par une tige de réglage (13) tournant grâce au filetage (27) vis-à-vis de la tubulure de réglage (26) pour le préréglage de la température de retour.

11. Régulateur de température de retour selon la revendication 10, **caractérisé par le fait qu'**une tige filetée de réglage (14) se trouve dans la tige de réglage (13) et lui est connectée pour le réglage de base de l'élément thermostatique (6) à l'aide d'un autre filetage (28).

12. Régulateur de température de retour selon la revendication 10, **caractérisé par le fait qu'**un bouchon de réglage (15) est connecté sans pouvoir tourner à la tige de réglage (13) et est doté d'au moins une fenêtre de réglage (17) avec repères qui interagit avec un marquage du boîtier (16) pour l'indication des préréglages.

13. Régulateur de température de retour selon la revendication 1, **caractérisé par le fait que** le boîtier (1) est doté d'un diaphragme de mesure (22) placé en aval des sièges de soupape (4, 7) dans le sens de l'écoulement du réfrigérant pour la mesure du débit et d'un raccord de mesure de la pression (23) en amont du diaphragme de mesure (22) et d'un raccord de mesure de la pression (24) en aval du diaphragme de mesure (22).

14. Régulateur de température de retour selon la revendication 1, **caractérisé par le fait que** le boîtier (1) est doté d'un diaphragme de mesure (22') placé en amont des sièges de soupape (4, 7) dans le sens de l'écoulement du réfrigérant pour la mesure du débit et d'un raccord de mesure de la pression (23) en amont du diaphragme de mesure (22) et d'un raccord de mesure de la pression (24) en aval du diaphragme de mesure (22).

15. Régulateur de température de retour selon la revendication 13 ou 14, **caractérisé par le fait que** le diaphragme de mesure (22 ou 22') est séparé et est fixé de façon étanche dans le boîtier (1).

16. Régulateur de température de retour selon la revendication 13 ou 14, **caractérisé par le fait que** les raccords de mesure de la pression (23 et 24) se trouvent respectivement près de la tubulure de réglage (26) ou de la partie supérieure de la soupape (12).

17. Régulateur de température de retour selon la revendication 1, **caractérisé par le fait que** des joints toriques (25) assurent l'étanchéité entre les corps de soupape (5, 8) ou entre les corps de soupape (5, 8) et la partie supérieure de la soupape (12) ou entre la tige de réglage (13) et la tubulure de réglage (26) ou entre la tige filetée de réglage (14) et la tige de réglage (13),
